# EUROPÄISCHE PATENTSCHRIFT

(11) **EP 4 459 121 B1**
(45) Veröffentlichungstag und Bekanntmachung des Hinweises auf die Patenterteilung: **12.08.2026**
(21) Anmeldenummer: 24160670.6
(22) Anmeldetag: 29.02.2024
(51) Int. Cl.: F02M 21/02, F02F 1/24, F02M 39/00, F02M 55/02

(54) **VORRICHTUNG ZUM ZUFÜHREN VON GASKRAFTSTOFF FÜR EINE BRENNKRAFTMASCHINE**
GAS FUEL SUPPLY DEVICE FOR INTERNAL COMBUSTION ENGINE
DISPOSITIF D'ALIMENTATION EN CARBURANT GAZEUX POUR MOTEUR À COMBUSTION INTERNE

(30) Priorität: 06.03.2023 DE 102023105458
(43) Veröffentlichungstag der Anmeldung: 06.11.2024
(73) Patentinhaber: MAN Truck & Bus SE, 80995 München (DE)
(72) Erfinder: Bogdanski, Peter, 80995 München (DE); Leitel, Thomas, 80995 München (DE); Hinrichsen, Florian, 80995 München (DE); Wagner, Andreas, 80995 München (DE)
(74) Vertreter: v. Bezold & Partner Patentanwälte - PartG mbB

(56) Entgegenhaltungen:
- WO-A1-2020/126765
- JP-A- H09 264 227

## Beschreibung

Die Erfindung betrifft eine Vorrichtung zum Zuführen von Gaskraftstoff, vorzugsweise Wasserstoff, zu mehreren Zylindern einer Brennkraftmaschine. Die Erfindung betrifft ferner ein Verfahren zum Verwenden mehrerer Zylinderköpfe.

Im Zuge der Bemühungen zum Reduzieren schädlicher Emissionen von Brennkraftmaschinen ist die Verbrennung von Gaskraftstoff, insbesondere Wasserstoff, eine aussichtsreiche Technik. Da Hersteller von Brennkraftmaschinen für PKW und Nutzfahrzeuge, wie LKW, jedoch herkömmlich auf die Entwicklung von Diesel- und Benzin-Brennkraftmaschinen gesetzt haben, besteht ein vergleichsweise hoher Entwicklungsaufwand und damit verbundene Kosten für die Entwicklung von Gaskraftstoff-Brennkraftmaschinen hin zur Serienreife.

Die WO 2020/126765 A1 betrifft eine Vorrichtung zur Zuführung von Gaskraftstoff zu einer Verbrennungskammer einer Brennkraftmaschine. Die Vorrichtung kann einen Zylinderkopf mit einer Längsbohrung aufweisen. Die Längsbohrung kann als Sammelleitung bzw. ein Common-Rail zum Versorgen mehrerer Gaskraftstoff-Zufuhrkanäle dienen. Die Gaskraftstoff-Zufuhrkanäle können von der Längsbohrung abzweigen, z. B. als Stichkanäle oder -bohrungen, die von der Brennraumseite her gebohrt sind.

Die JP H09 264227 A offenbart ein Common-Rail für Diesel-Kraftstoff, das in den zylindrischen Hohlraum eines Zylinderkopf-Hauptkörpers eingepasst ist. Kraftstoff wird von einer Kraftstoffeinspritzpumpe über einen ersten Kraftstoffschlauch zu einem ersten Anschluss geleitet, der mit der ersten Kraftstoffschlauch-Anschlussöffnung des Zylinderkopf-Hauptkörpers verbunden ist, und wird über die erste Lochöffnung des Common-Rails zu einer Sammelkammer geleitet, um eine Ansammlung durchzuführen. Der Kraftstoff wird vom Sammler des Common-Rail über eine zweite Bohrungsöffnung zum zweiten Kraftstoffleitungsanschluss des Zylinderkopf-Hauptkörpers geleitet und über eine zweite Kraftstoffleitung zu einer Einspritzdüse geführt.

Der Erfindung liegt die Aufgabe zu Grunde, eine verbesserte Vorrichtung zum Zuführen von Gaskraftstoff für eine Brennkraftmaschine zu schaffen.

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft eine Vorrichtung zum Zuführen von Gaskraftstoff, vorzugsweise Wasserstoff, zu mehreren Zylindern einer Brennkraftmaschine. Die Vorrichtung weist einen (z. B. Mehrzylinder-) Zylinderkopf auf, der einen Längskanal (z. B. als Gaskraftstoff-Common-Rail) und mehrere Stichkanäle aufweist. Die mehreren Stichkanäle sind entlang des Längskanals angeordnet und erstrecken sich jeweils zwischen dem Längskanal und einer Oberseite des Zylinderkopfes. Die Vorrichtung weist mehrere Gaskraftstoffinjektoren (z. B. Top-Feed-Gaskraftstoff-Injektor), vorzugsweise Gaskraftstoff-Einblasinjektoren (z. B. Wasserstoff-Einblasinjektoren), auf, wobei die mehreren Gaskraftstoffinjektoren in dem Zylinderkopf aufgenommen sind und jeweils an einem über die Oberseite des Zylinderkopfes überstehenden Ende einen Gaskraftstoffeinlass aufweisen. Die Vorrichtung weist mehrere Gaskraftstoffleitungen auf, die die Gaskraftstoffeinlässe und die mehreren Stichkanäle miteinander verbinden.

Vorteilhaft kann der Längskanal als direkt in dem Zylinderkopf integriertes Gaskraftstoff-Common-Rail dienen, in dem Gaskraftstoff, wie bspw. Wasserstoff, in ausreichender Menge zwischengespeichert werden kann. Damit kann auf ein separates Gaskraftstoff-Common-Rail verzichtet werden, wodurch die Vorrichtung besonders bauraumsparend ist. Über die außerhalb des Zylinderkopfes geführten Gaskraftstoffleitungen kann der Gaskraftstoff zu den Gaskraftstoffinjektoren zugeführt werden. Damit kann einerseits eine verringerte, durch den Zylinderkopf bewirkte Aufwärmung des Gaskraftstoffs erreicht werden. Andererseits kann dadurch ermöglicht werden, dass als Gaskraftstoffinjektoren sogenannte Top-Feed-Kraftstoffinjektoren (Anschluss oben am Kraftstoffinjektor) verwendet werden können, die in vielerlei Hinsicht (z. B. Zuverlässigkeit, Integrierbarkeit, Verfügbarkeit bei Entwicklungslieferanten usw.) Vorteile gegenüber sogenannten Side-Feed-Kraftstoffinjektoren aufweisen können. Zusätzlich können die Anschlussstellen der Gaskraftstoffleitungen unterhalb einer Zylinderkopfhaube angeordnet sein, sodass ein Leckagerisiko verringert und Bauraum eingespart werden kann. Besonders vorteilhaft kann an der Vorrichtung zusätzlich sein, dass ein vergleichsweise geringer Entwicklungsaufwand hin zur Serienreife besteht. Statt einer kompletten Neuentwicklung der Vorrichtung zum Zuführen von Gaskraftstoff kann auf bewährte Techniken wie den Zylinderkopf einer Flüssigkraftstoff-Brennkraftmaschine zurückgegriffen werden. Besonders vorteilhaft ist dabei, dass ein bereits im Zylinderkopf der Flüssigkraftstoff-Brennkraftmaschine vorhandener Längskanal, der in der Flüssigkraftstoff-Brennkraftmaschine als ein Flüssigkraftstoff-Rückflusskanal verwendet wird/wurde, für das Gaskraftstoff-Common-Rail verwendet werden kann.

In einem Ausführungsbeispiel sind die mehreren Stichkanäle jeweils als eine Stichbohrung ausgeführt, vorzugsweise ausgehend von der Oberseite des Zylinderkopfes. Vorteilhaft können die Stichkanäle damit auf einfache Weise und sehr genau hergestellt, sowie in bestehende Fertigungslinien integriert werden.

In einem weiteren Ausführungsbeispiel ist der Längskanal als eine Längsbohrung, vorzugsweise eine Längsdurchgangsbohrung, ausgeführt. Vorteilhaft kann der Längskanal damit auf einfache Weise und sehr genau hergestellt werden. Vorteilhaft kann die Längsdurchgangsbohrung von beiden Querseiten des Zylinderkopfes aus hergestellt bzw. gebohrt sein sein, was jeweils ein weniger aufwendiges Tiefbohrverfahren erfordert, als wenn der Längskanal als Sackloch tiefgebohrt wäre.

In einer Ausführungsform ist ein Ende des Längskanals mit einem Stopfen, vorzugsweise einem Blindnietstopfen, verschlossen. Optional kann noch ein weiteres Ende des Längskanals das dem Ende entgegengesetzt ist, mit einem weiteren Stopfen, vorzugsweise einem weiteren Blindnietstopfen, verschlossen sein. Vorteilhaft kann das Ende bzw. können die Enden des Längskanals somit sicher verschlossen sein.

In einer weiteren Ausführungsform ist der Längskanal in einem Oberdeck des Zylinderkopfes und/oder in einem Zwischendeck des Zylinderkopfes angeordnet. Vorteilhaft kann damit eine nur geringe, durch den Zylinderkopf ausgehend von der Brennraumfläche bewirkte Aufwärmung, des durch den Längskanal strömenden Gaskraftstoffs erreicht werden.

In einer weiteren Ausführungsform weist die Vorrichtung ferner mehrere Dichtelemente, vorzugsweise O-Ringe, auf, wobei die mehreren Dichtelemente zwischen Einlassabschnitten der mehreren Gaskraftstoffleitungen und Auslassabschnitten der mehreren Stichkanäle abdichten. Vorteilhaft kann damit eine gasdichte Verbindung zwischen den Gaskraftstoffleitungen und den Stichkanälen ermöglicht werden, die zuverlässig und konstruktiv wenig aufwendig ist, da sie an die zu erwartenden Gasdrücke zwischen 10 bar und 40 bar, vorzugsweise zwischen 20 bar und 30 bar, angepasst ist.

In einer Ausführungsvariante sind die Einlassabschnitte in die Auslassabschnitte eingesteckt, und/oder die Dichtelemente sind zwischen den Einlassabschnitten und den Auslassabschnitten angeordnet, vorzugsweise gehalten in Außenringnuten der Einlassabschnitte. Vorteilhaft kann damit eine sichere und gasdichte Verbindung zwischen den Einlassabschnitten und den Auslassabschnitten erreicht werden.

In einer weiteren Ausführungsvariante weist die Vorrichtung ferner mehrere Befestigungsplatten auf, die die Einlassabschnitte an der Oberseite des Zylinderkopfes sichern, vorzugsweise durch Verschrauben der mehreren Befestigungsplatten mit dem Zylinderkopf. Vorteilhaft kann damit eine sichere und zugleich einfache Befestigung der Einlassabschnitte der Gaskraftstoffleitungen erreicht werden, da diese an die zu erwartenden Gasdrücke zwischen 10 bar und 40 bar, vorzugsweise zwischen 20 bar und 30 bar, angepasst ist.

Alternativ ist es beispielsweise möglich, die Einlassabschnitte jeweils mittels einer Schneidringverschraubung an dem Zylinderkopf zu befestigen.

In einem Ausführungsbeispiel weist der Zylinderkopf mindestens einen Sensor-Zugangskanal auf, der in den Längskanal mündet, und die Vorrichtung weist ferner mindestens einen Sensor auf, der in dem mindestens einen Sensor-Zugangskanal angeordnet ist. Vorteilhaft kann auf diese Weise eine Erfassung von Messwerten bezüglich des Gaskraftstoffs in dem Längskanal ermöglicht werden, die zudem einfach herstellbar und von außen gut zugänglich ist.

Alternativ oder zusätzlich ist es möglich, dass ein Sensor (z. B. ein Drucksensor oder ein Temperatursensor) an oder in einem Ende des Längskanals angeordnet ist. Optional kann ein weiterer Sensor (z. B. ein Drucksensor oder ein Temperatursensor) an oder in einem dem Ende entgegengesetzten Ende des Längskanals angeordnet sein.

In einem weiteren Ausführungsbeispiel ist der mindestens eine Sensor-Zugangskanal als eine Stichbohrung ausgeführt. Alternativ oder zusätzlich kann der mindestens eine Sensor-Zugangskanal sich ausgehend von einer Längsaußenseite des Zylinderkopfes hin zu dem Längskanal erstrecken. Vorteilhaft kann der mindestens eine Sensor-Zugangskanal somit besonders einfach herstellbar und von außen besonders gut zugänglich sein.

In einer Ausführungsform weist der mindestens eine Sensor-Zugangskanal einen Drucksensor-Zugangskanal auf, und der mindestens eine Sensor weist einen Drucksensor auf, der in dem Drucksensor-Zugangskanal angeordnet ist. Alternativ oder zusätzlich weist der mindestens eine Sensor-Zugangskanal einen Temperatursensor-Zugangskanal auf, und der mindestens eine Sensor weist einen Temperatursensor auf, der in dem Temperatursensor-Zugangskanal angeordnet ist. Vorteilhaft kann damit auf konstruktiv einfache Weise eine Temperatur- und/oder Drucküberwachung des Gaskraftstoffs in dem Längskanal ermöglicht werden.

In einer weiteren Ausführungsform weist der Zylinderkopf mindestens einen Gaskraftstoffzufuhrkanal auf, der in den Längskanal mündet. Vorzugsweise ist der mindestens eine Gaskraftstoffzufuhrkanal als eine Stichbohrung ausgeführt, und/oder erstreckt sich der mindestens eine Gaskraftstoffzufuhrkanal ausgehend von einer Längsaußenseite des Zylinderkopfes hin zu dem Längskanal. Vorteilhaft kann auf diese Weise eine einfach herstellbare und von außen gut zugängliche Zuführung von Gaskraftstoff ermöglicht werden.

Vorzugsweise kann die Oberseite des Zylinderkopfes entgegengesetzt zu einer Brennraumseite des Zylinderkopfes ausgerichtet sein.

Ein weiterer Aspekt der vorliegenden Offenbarung betrifft ein Kraftfahrzeug, vorzugsweise Nutzfahrzeug, besonders bevorzugt Lastkraftwagen oder Omnibus. Das Kraftfahrzeug weist eine Gaskraftstoff-Brennkraftmaschine, vorzugsweise Wasserstoff-Brennkraftmaschine, mit einer Vorrichtung wie hierin offenbart auf.

Es ist auch möglich, die Vorrichtung wie hierin offenbart für Personenkraftwagen, Großmotoren, geländegängige Fahrzeuge, stationäre Motoren, Marinemotoren usw. zu verwenden.

Ein weiterer Aspekt der vorliegenden Offenbarung betrifft ein Verfahren zum Verwenden mehrerer (z. B. Mehrzylinder-) Zylinderköpfe. Das Verfahren weist ein Bereitstellen der mehreren (z. B. Mehrzylinder-) Zylinderköpfe, die eine gleiche Grundform (z. B. gegossene Grundform oder Urform) und einen gleichen Längskanal, vorzugsweise gleiche Längsbohrung, aufweisen, auf. Das Verfahren weist ein Verwenden mindestens eines der mehreren Zylinderköpfe in (mindestens) einer Flüssigkraftstoff-Brennkraftmaschine, vorzugsweise Diesel-Brennkraftmaschine, wobei der jeweilige Längskanal als Flüssigkraftstoff-Rückflusskanal verwendet wird, auf. Das Verfahren weist ein Verwenden mindestens eines anderen der mehreren Zylinderköpfe in (mindestens) einer Gaskraftstoff-Brennkraftmaschine, vorzugsweise Wasserstoff-Brennkraftmaschine, wobei der jeweilige Längskanal als Gaskraftstoff-Common-Rail verwendet wird, auf. Vorteilhaft kann auf diese Weise ein Entwicklungsaufwand hin zur Serienreife der Gaskraftstoff-Brennkraftmaschine wesentlich verringert werden. Statt einer kompletten Neuentwicklung des Zylinderkopfes kann auf einen bewährten Zylinderkopf einer Flüssigkraftstoff-Brennkraftmaschine zurückgegriffen werden. Besonders vorteilhaft ist dabei, dass ein bereits im Zylinderkopf vorhandener Längskanal, der in der Flüssigkraftstoff-Brennkraftmaschine als ein Flüssigkraftstoff-Rückflusskanal verwendet wird/wurde, für das Gaskraftstoff-Common-Rail verwendet werden kann.

In einem Ausführungsbeispiel weist (z. B. nur) die Gaskraftstoff-Brennkraftmaschine eine Vorrichtung wie hierin offenbart auf. Vorzugsweise kann der mindestens eine andere der mehreren Zylinderköpfe der Zylinderkopf der Vorrichtung sein.

Vorzugsweise kann nur der mindestens eine andere der mehreren Zylinderköpfe für die (mindestens eine) Flüssigkraftstoff-Brennkraftmaschine die mehreren Stichkanäle wie hierin offenbart aufweisen, der mindestens eine der mehreren Zylinderköpfe für die (mindestens eine) Flüssigkraftstoff-Brennkraftmaschine hingegen nicht.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Draufsicht auf einen Abschnitt einer Vorrichtung zum Zuführen von Gaskraftstoff gemäß einem Ausführungsbeispiel der vorliegenden Offenbarung;
- Figur 2: eine Schnittansicht entlang einer Line A-A in Figur 1; und
- Figur 3: eine rein schematische Darstellung eines Zylinderkopfes der beispielhaften Vorrichtung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

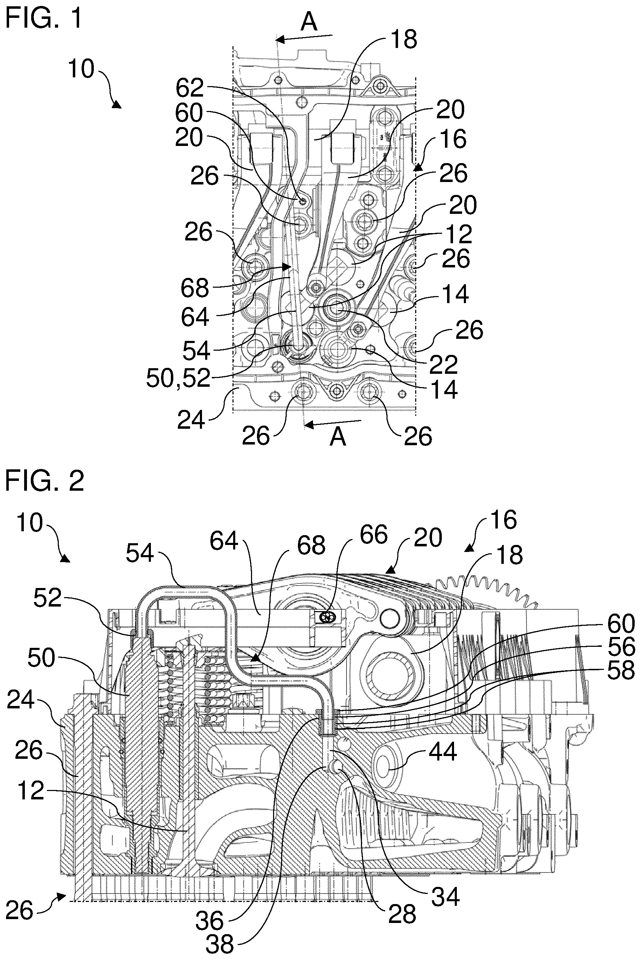

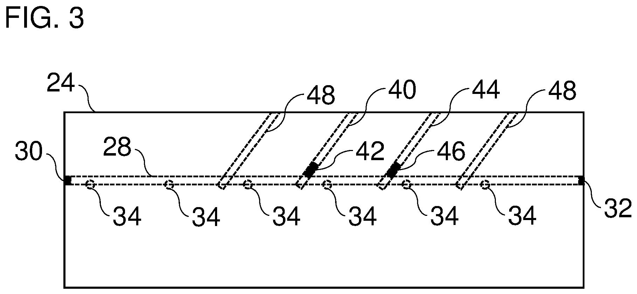

Die Figuren 1 und 2 zeigen Abschnitte einer Vorrichtung 10 zum Zuführen von Gaskraftstoff für eine Brennkraftmaschine. Die Figur 3 zeigt eine stark schematisierte Darstellung eines Zylinderkopfes 24 der Vorrichtung 10.

Die Vorrichtung 10 weist den Zylinderkopf 24, mehrere Gaskraftstoffinjektoren 50 und mehrere Gaskraftstoffleitungen 54 auf.

Die Vorrichtung 10 kann in einer Gaskraftstoff-Brennkraftmaschine, vorzugsweise eine Wasserstoff-Brennkraftmaschine, umfasst sein. Die Brennkraftmaschine kann beispielsweise in einem Kraftfahrzeug, vorzugsweise Nutzfahrzeug, umfasst sein. Das Nutzfahrzeug kann beispielsweise ein Lastkraftwagen oder ein Omnibus sein.

Die Brennkraftmaschine ist eine mehrzylindrige Brennkraftmaschine bzw. weist mehrere Zylinder auf. Besonders bevorzugt ist die Brennkraftmaschine als eine Reihenvierzylinder-, Reihenfünfzylinder- oder Reihensechszylinder-Brennkraftmaschine ausgeführt.

Die Brennkraftmaschine kann neben der Vorrichtung 10 beispielsweise noch mindestens ein Einlassventil 12 je Zylinder, mindestens ein Auslassventil 14 je Zylinder sowie einen Ventiltrieb 16 aufweisen. Optional kann die Brennkraftmaschine ferner noch eine Zündvorrichtung 22 je Zylinder aufweisen.

Durch die Einlassventile 12 kann, vorzugsweise verdichtete, Verbrennungsluft in die Zylinder bzw. Verbrennungskammern der Brennkraftmaschine geleitet werden. Durch die Auslassventile 14 kann Abgas aus den Zylindern bzw. Verbrennungskammern der Brennkraftmaschine abgeleitet werden. Die Einlassventile 12 und die Auslassventile 14 können in dem Zylinderkopf 24 aufgenommen sein.

Der Ventiltrieb 16 kann zum Betätigen der Einlassventile 12 und der Auslassventile 14 ausgeführt sein. Der Ventiltrieb 16 kann beispielsweise mindestens eine Nockenwelle 18 und Kraftübertragungshebel 20, wie beispielsweise Kipphebel, aufweisen. Die Kraftübertragungshebel 20 können die Einlassventile 12 und die Auslassventile 14 betätigen. Die Kraftübertragungshebel 20 können Wirkverbindungen zwischen der mindestens eine Nockenwelle 18 und den Einlassventilen 12 und den Auslassventilen 14 herstellen. Es ist möglich, dass der Ventiltrieb 16 ein variabler Ventiltrieb ist. Der Ventiltrieb 16 kann an dem Zylinderkopf 24 abgestützt sein.

Die Zündvorrichtungen 22 können ein zündfähiges Gemisch in dem jeweiligen Zylinder zünden oder das Zünden zumindest unterstützen. Beispielsweise können die Zündvorrichtungen 22 jeweils eine Zündkerze, eine Glühkerze oder einen sogenannten Pilot-Kraftstoffinjektor zum Einspritzen einer selbstzündenden Kraftstoffmenge eines bspw. flüssigen Kraftstoffs aufweisen. Die Zündvorrichtungen 22 können je Zylinder zentral angeordnet sein. Die Zündvorrichtungen 22 können in dem Zylinderkopf 24 aufgenommen sein.

Der Zylinderkopf 24 dient zum Abdecken mehrerer Verbrennungskammern bzw. Zylinder der Brennkraftmaschine. Der Zylinderkopf 24 kann daher auch als ein Mehrzylinder-Zylinderkopf bezeichnet werden. Vorzugsweise kann der Zylinderkopf 24 ein Vierzylinder-Zylinderkopf zum Abdecken von vier Verbrennungskammern bzw. Zylindern, ein Fünfzylinder-Zylinderkopf zum Abdecken von fünf Verbrennungskammern bzw. Zylindern oder ein Sechszylinder-Zylinderkopf zum Abdecken von sechs Verbrennungskammern bzw. Zylindern sein. Der Zylinderkopf 24 kann sich länglich über die mehreren in Reihe angeordneten Zylinder erstrecken. Bevorzugt ist der Zylinderkopf 24 ein Gusskörper bzw. gegossen.

Der Zylinderkopf 24 kann an einem Motorblock bzw. Kurbelgehäuse der Brennkraftmaschine befestigt sein (nicht in den Figuren dargestellt). Beispielsweise kann der Zylinderkopf 24 mittels mehrerer Befestigungselemente 26 mit dem Motorblock bzw. Kurbelgehäuse verschraubt sein. Bevorzugt sind die Befestigungselemente 26 als Zylinderkopfschrauben ausgeführt.

Der Zylinderkopf 24 weist einen Längskanal 28 und mehrere Stichkanäle 34 auf. Optional kann der Zylinderkopf 24 beispielsweise noch mindestens einen Sensor-Zugangskanal 40, 44 und/oder mindestens einen Gaskraftstoffzufuhrkanal 48 aufweisen.

Der Längskanal 28 kann als ein Gaskraftstoff-Common-Rail, das im Zylinderkopf 24 integriert ist, dienen. Im Längskanal 28 kann verdichteter Gaskraftstoff, vorzugsweise Wasserstoff, gesammelt und zwischengespeichert werden. Der verdichtete Gaskraftstoff im Längskanal 28 kann beispielsweise einen Druck zwischen 10 bar und 40 bar, vorzugsweise zwischen 20 bar und 30 bar, aufweisen.

Der Längskanal 28 kann sich längs durch den Zylinderkopf 24 erstrecken. Beispielsweise kann der Längskanal 28 im Wesentlichen parallel zu einer Längsachse des Zylinderkopfes 24 sein. Bevorzugt erstreckt sich der Längskanal 28 als ein Durchgangskanal zwischen beiden Querseiten des Zylinderkopfes 24.

Besonders bevorzugt ist der Längskanal 28 als eine Längsbohrung ausgeführt. Beispielsweise kann der Längskanal 28 mittels eines Tiefbohrverfahrens geschaffen werden. Vorzugsweise ist der Längskanal 28 als eine Längsdurchgangsbohrung ausgeführt. Beispielsweise kann die Längsdurchgangsbohrung von beiden Querseiten des Zylinderkopfes 24 aus gebohrt sein.

Der Längskanal 28 kann beispielsweise einen Durchmesser zwischen 9 mm und 15 mm, vorzugsweise zwischen 11 mm und 13 mm, besonders bevorzugt von ca. 12 mm, aufweisen.

Der Längskanal 28 ist vorzugsweise in einem Oberdeck des Zylinderkopfes 24 und/oder in einem Zwischendeck des Zylinderkopfes 24 angeordnet ist. Vorzugsweise kann der Längskanal 28 damit entfernt zu einem Feuerdeck des Zylinderkopfes 24 angeordnet sein.

Ein Ende des Längskanals 28 kann mit einem Stopfen 30 verschlossen sein. Bevorzugt ist der Stopfen 30 als ein Blindnietstopfen ausgeführt. Das Ende kann an einer Querseite des Zylinderkopfes 24 angeordnet sein.

Vorzugsweise kann ein weiteres Ende des Längskanals 28 mit einem weiteren Stopfen 32 verschlossen sein. Bevorzugt ist der weitere Stopfen 30 als ein Blindnietstopfen ausgeführt. Das weitere Ende kann entgegengesetzt zu dem Ende des Längskanals 28 angeordnet sein. Das weitere Ende kann an einer weiteren Querseite des Zylinderkopfes 24 angeordnet sein.

Der beispielhafte Zylinderkopf 24 mit dem Längskanal 28 als Gaskraftstoff-Common-Rail lässt sich besonders bevorzugt von einem Zylinderkopf für eine Flüssigkraftstoff-Brennkraftmaschine, vorzugsweise Diesel-Brennkraftmaschine, ableiten. Der Zylinderkopf für die Flüssigkraftstoff-Brennkraftmaschine kann den Längskanal 28 nämlich schon zu einem anderen Zweck aufweisen, nämlich als Flüssigkraftstoff-Rückflusskanal für den Rücklauf von Flüssigkraftstoff.

Die Stichkanäle 34 sind entlang des Längskanals 28 angeordnet. Beispielsweise können die Stichkanäle 34 beabstandet zueinander entlang des Längskanals 28 angeordnet sein. Die Stichkanäle 34 können beispielsweise parallel zueinander ausgerichtet sein. Die Stichkanäle 34 können angewinkelt, vorzugsweise senkrecht, zu dem Längskanal 28 und/oder einer Längsachse des Zylinderkopfes 24 ausgerichtet sein. Vorzugsweise ist je Gaskraftstoffinjektor 50 oder je Gaskraftstoffleitung 54 ein Stichkanal 34 vorgesehen.

Die Stichkanäle 34 erstrecken sich jeweils zwischen dem Längskanal 28 und einer Oberseite des Zylinderkopfes 24. Im Einzelnen kann ein jeweiliger Auslassabschnitt 36 der Stichkanäle 34 an der Oberseite des Zylinderkopfes 24 angeordnet sein. Ein jeweiliger Einlassabschnitt 38 der Stichkanäle 34 kann an dem Längskanal 28 angeordnet sein. Bevorzugt kann der Längskanal 28 sich durch die Einlassabschnitte 38 der Stichkanäle 34 erstrecken.

Vorzugsweise sind die Stichkanäle 34 jeweils als eine Stichbohrung ausgeführt. Beispielsweise können die Stichkanäle 34 von einer Oberseite des Zylinderkopfes 24 aus gebohrt sein.

Die Stichkanäle 34 sind vorzugsweise in einem Oberdeck des Zylinderkopfes 24 und/oder in einem Zwischendeck des Zylinderkopfes 24 angeordnet.

Der mindestens eine Sensor-Zugangskanal 40, 44 kann in den Längskanal 28 münden, wie beispielhaft in Figur 3 dargestellt ist. In dem mindestens einen Sensor-Zugangskanal 40, 44 kann ein Sensor 42, 46 zum Erfassen eines Messwerts bezüglich des Gaskraftstoffs in dem Längskanal 28 angeordnet sein. Der mindestens eine Sensor-Zugangskanal 40, 44 kann abgedichtet bzw. verschlossen sein, z. B. von einem Träger oder einer Hülse des jeweiligen Sensors 42, 46.

Beispielsweise kann der mindestens eine Sensor-Zugangskanal 40, 44 sich ausgehend von einer Längsaußenseite des Zylinderkopfes 24 hin zu dem Längskanal 28 erstrecken. Vorzugsweise kann der mindestens eine Sensor-Zugangskanal 40, 44 als eine Stichbohrung ausgeführt sein. Vorzugsweise kann der mindestens eine Sensor-Zugangskanal 40, 44 ausgehend von der Längsaußenseite des Zylinderkopfes 24 gebohrt sein.

Beispielsweise kann der mindestens eine Sensor-Zugangskanal 40, 44 einen Temperatursensor-Zugangskanal 40, in dem ein Temperatursensor 42 angeordnet ist, und/oder einen Drucksensor-Zugangskanal 44, in dem ein Drucksensor 46 angeordnet ist, aufweisen. Der Temperatursensor 42 kann eine Temperatur des Gaskraftstoffs in dem Längskanal 28 erfassen. Der Drucksensor 46 kann einen Druck des Gaskraftstoffs in dem Längskanal 28 erfassen.

Vorzugsweise kann der mindestens eine Sensor-Zugangskanal 40, 44 in einem Oberdeck und/oder Zwischendeck des Zylinderkopfes 24 angeordnet sein.

Der mindestens eine Gaskraftstoffzufuhrkanal 48 kann in den Längskanal 28 münden, wie beispielhaft in Figur 3 dargestellt ist. An den mindestens einen Gaskraftstoffzufuhrkanal 48 kann eine Gaskraftstoffleitung angeschlossen sein, über die Gaskraftstoff zu dem mindestens einen Gaskraftstoffzufuhrkanal 48 zugeführt werden kann (nicht in den Figuren dargestellt). Die Gaskraftstoffleitung kann bspw. mit einem Gaskraftstofftank verbunden sein.

Beispielsweise kann der mindestens eine Gaskraftstoffzufuhrkanal 48 sich ausgehend von einer Längsaußenseite des Zylinderkopfes 24 hin zu dem Längskanal 28 erstrecken. Vorzugsweise kann der mindestens eine Gaskraftstoffzufuhrkanal 48 als eine Stichbohrung ausgeführt sein. Vorzugsweise kann der mindestens eine Gaskraftstoffzufuhrkanal 48 ausgehend von der Längsaußenseite des Zylinderkopfes 24 gebohrt sein.

Die Gaskraftstoffinjektoren 50 können Gaskraftstoff in die Verbrennungskammern bzw. Zylinder der Brennkraftmaschine zuführen. Vorzugsweise kann je Zylinder der Brennkraftmaschine ein Gaskraftstoffinjektor 50 vorgesehen sein.

Vorzugsweise können die Gaskraftstoffinjektoren 50 als Gaskraftstoff-Einblasinjektoren, bevorzugt Wasserstoff-Einblasinjektoren, ausgeführt sein, die den Gaskraftstoff in die Verbrennungskammern bzw. Zylinder einblasen können. Beispielsweise können die Gaskraftstoffinjektoren 50 dazu ausgebildet sein, den Gaskraftstoff mit einem Druck zwischen 10 bar und 40 bar, vorzugsweise zwischen 20 bar und 30 bar, einzublasen.

Die Gaskraftstoffinjektoren 50 sind in dem Zylinderkopf 24 aufgenommen. Die Gaskraftstoffinjektoren 50 weisen jeweils an einem über die Oberseite des Zylinderkopfes 24 überstehenden Ende einen Gaskraftstoffeinlass 52 auf. Entsprechend können die Gaskraftstoffinjektoren 50 als sogenannte Top-Feed-Kraftstoffinjektoren ausgeführt sein.

Die Gaskraftstoffleitungen 54 verbinden die Gaskraftstoffeinlässe 52 der Gaskraftstoffinjektoren 50 und die mehreren Stichkanäle 34 miteinander. Bevorzugt kann jeder Stichkanal 34 über je eine der Gaskraftstoffleitungen 54 mit einem jeweiligen Gaskraftstoffinjektor 50 verbunden sein. Bevorzugt können die Gaskraftstoffleitungen 54 als starre Rohrleitungen, z. B. als Metallrohrleitungen, ausgeführt sein.

Im Einzelnen können die Gaskraftstoffleitungen 54 jeweils einen Einlassabschnitt 56 aufweisen, der mit je einem der Auslassabschnitte 36 der Stichkanäle 34 verbunden ist. Bevorzugt können die Einlassabschnitte 56 in den jeweiligen Auslassabschnitt 36 eingesteckt sein. Zwischen den Einlassabschnitten 56 und den Auslassabschnitten 36 können Dichtelemente 58 angeordnet sein. Die Dichtelemente 58 können zwischen den Einlassabschnitten 56 und den Auslassabschnitten 36 abdichten. Beispielsweise können zwei Dichtelemente 58 je Einlassabschnitt 56 / Auslassabschnitten 36 umfasst sein. Die Dichtelemente 58 sind bevorzugt als O-Ringe ausgeführt. Vorzugsweise können die Dichtelemente 58 in Außenringnuten der Einlassabschnitte 56 gehalten sein.

Jeder Einlassabschnitt 56 kann über eine jeweilige Befestigungsplatte 60 an der Oberseite des Zylinderkopfes 24 gesichert sein. Die Befestigungsplatten 60 können jeweils mittels eines eigenen Befestigungselements 62 an dem Zylinderkopf 24 befestigt sein. Die Befestigungselemente 62 sind vorzugsweise als Befestigungsschrauben ausgeführt.

Die Gaskraftstoffleitungen 54 können zumindest teilweise von mindestens einer Kabelführung 64 überspannt sein. Die Kabelführung 64 kann einen, vorzugsweise nach oben offenen, Kabelkanal aufweisen, in dem ein Kabelstrang 66 (nur in Figur 2 dargestellt) angeordnet ist. Vorzugsweise kann die von der Kabelführung 64 überspannte Gaskraftstoffleitung 54 einen Stufenabschnitt 68 dort aufweisen, wo sie von der jeweiligen Kabelführung 64 überspannt wird, vorzugsweise um Bauraum für die Kabelführung 64 zu schaffen.

### Bezugszeichenliste

- 10: Vorrichtung zum Zuführen von Gaskraftstoff
- 12: Einlassventil
- 14: Auslassventil
- 16: Ventiltrieb
- 18: Nockenwelle
- 20: Kraftübertragungshebel
- 22: Zündvorrichtung
- 24: Zylinderkopf
- 26: Befestigungselement
- 28: Längskanal
- 30: Stopfen
- 32: Weiterer Stopfen
- 34: Stichkanal
- 36: Auslassabschnitt
- 38: Einlassabschnitt
- 40: Temperatursensor-Zugangskanal
- 42: Temperatursensor
- 44: Drucksensor-Zugangskanal
- 46: Drucksensor
- 48: Gaskraftstoffzufuhrkanal
- 50: Gaskraftstoffinjektor
- 52: Gaskraftstoffeinlass
- 54: Gaskraftstoffleitung
- 56: Einlassabschnitt
- 58: Dichtelement
- 60: Befestigungsplatte
- 62: Befestigungselement
- 64: Kabelführung
- 66: Kabelstrang
- 68: Stufenabschnitt

## Patentansprüche

1. Vorrichtung (10) zum Zuführen von Gaskraftstoff, vorzugsweise Wasserstoff, zu mehreren Zylindern einer Brennkraftmaschine, aufweisend:
einen Zylinderkopf (24), der einen Längskanal (28) und mehrere Stichkanäle (34) aufweist, wobei die mehreren Stichkanäle (34) entlang des Längskanals (28) angeordnet sind und sich jeweils zwischen dem Längskanal (28) und einer Oberseite des Zylinderkopfes (24) erstrecken;
mehrere Gaskraftstoffinjektoren (50), vorzugsweise Gaskraftstoff-Einblasinjektoren, wobei die mehreren Gaskraftstoffinjektoren (50) in dem Zylinderkopf (24) aufgenommen sind und jeweils an einem über die Oberseite des Zylinderkopfes (24) überstehenden Ende einen Gaskraftstoffeinlass (52) aufweisen; und
mehrere Gaskraftstoffleitungen (54), die die Gaskraftstoffeinlässe (52) und die mehreren Stichkanäle (34) miteinander verbinden.

2. Vorrichtung (10) nach Anspruch 1, wobei:
die mehreren Stichkanäle (34) jeweils als eine Stichbohrung ausgeführt sind, vorzugsweise ausgehend von der Oberseite des Zylinderkopfes (24).

3. Vorrichtung (10) nach Anspruch 1 oder Anspruch 2, wobei:
der Längskanal (28) als eine Längsbohrung, vorzugsweise eine Längsdurchgangsbohrung, ausgeführt ist.

4. Vorrichtung (10) nach einem der vorherigen Ansprüche, wobei:
ein Ende des Längskanals (28) mit einem Stopfen (30), vorzugsweise einem Blindnietstopfen, verschlossen ist; und optional
ein weiteres Ende des Längskanals (28), das dem Ende entgegengesetzt ist, mit einem weiteren Stopfen (32), vorzugsweise einem weiteren Blindnietstopfen, verschlossen ist.

5. Vorrichtung (10) nach einem der vorherigen Ansprüche, wobei:
der Längskanal (28) in einem Oberdeck des Zylinderkopfes (24) und/oder in einem Zwischendeck des Zylinderkopfes (24) angeordnet ist.

6. Vorrichtung (10) nach einem der vorherigen Ansprüche, ferner aufweisend:
mehrere Dichtelemente (58), vorzugsweise O-Ringe, wobei die mehreren Dichtelemente (58) zwischen Einlassabschnitten (56) der mehreren Gaskraftstoffleitungen (54) und Auslassabschnitten (36) der mehreren Stichkanäle (34) abdichten.

7. Vorrichtung (10) nach Anspruch 6, wobei:
die Einlassabschnitte (56) in die Auslassabschnitte (36) eingesteckt sind; und/oder
die Dichtelemente (58) zwischen den Einlassabschnitten (56) und den Auslassabschnitten (36) angeordnet sind, vorzugsweise gehalten in Außenringnuten der Einlassabschnitte (56).

8. Vorrichtung (10) nach Anspruch 6 oder Anspruch 7, ferner aufweisend:
mehrere Befestigungsplatten (60), die die Einlassabschnitte (56) an der Oberseite des Zylinderkopfes (24) sichern, vorzugsweise durch Verschrauben der mehreren Befestigungsplatten (60) mit dem Zylinderkopf (24).

9. Vorrichtung (10) nach einem der vorherigen Ansprüche, wobei:
der Zylinderkopf (24) mindestens einen Sensor-Zugangskanal (40, 44) aufweist, der in den Längskanal (28) mündet; und
die Vorrichtung (10) ferner mindestens einen Sensor (42, 46) aufweist, der in dem mindestens einen Sensor-Zugangskanal (40, 44) angeordnet ist.

10. Vorrichtung (10) nach Anspruch 9, wobei:
der mindestens eine Sensor-Zugangskanal (40, 44) als eine Stichbohrung ausgeführt ist; und/oder
der mindestens eine Sensor-Zugangskanal (40, 44) sich ausgehend von einer Längsaußenseite des Zylinderkopfes (24) hin zu dem Längskanal (28) erstreckt.

11. Vorrichtung (10) nach Anspruch 9 oder Anspruch 10, wobei:
der mindestens eine Sensor-Zugangskanal (40, 44) einen Drucksensor-Zugangskanal (44) aufweist und der mindestens eine Sensor (42, 46) einen Drucksensor (46) aufweist, der in dem Drucksensor-Zugangskanal (44) angeordnet ist; und/oder
der mindestens eine Sensor-Zugangskanal (40, 44) einen Temperatursensor-Zugangskanal (40) aufweist und der mindestens eine Sensor (42, 46) einen Temperatursensor (42) aufweist, der in dem Temperatursensor-Zugangskanal (40) angeordnet ist.

12. Vorrichtung (10) nach einem der vorherigen Ansprüche, wobei:
der Zylinderkopf (24) mindestens einen Gaskraftstoffzufuhrkanal (48) aufweist, der in den Längskanal (28) mündet,
wobei vorzugsweise:
der mindestens eine Gaskraftstoffzufuhrkanal (48) als eine Stichbohrung ausgeführt ist; und/oder
der mindestens eine Gaskraftstoffzufuhrkanal (48) sich ausgehend von einer Längsaußenseite des Zylinderkopfes (24) hin zu dem Längskanal (28) erstreckt.

13. Kraftfahrzeug, vorzugsweise Nutzfahrzeug, besonders bevorzugt Lastkraftwagen oder Omnibus, aufweisend:
eine Gaskraftstoff-Brennkraftmaschine, vorzugsweise Wasserstoff-Brennkraftmaschine, mit einer Vorrichtung (10) nach einem der vorherigen Ansprüche.

14. Verfahren zum Verwenden mehrerer Zylinderköpfe (24), aufweisend:
Bereitstellen der mehreren Zylinderköpfe (24), die eine gleiche Grundform und einen gleichen Längskanal (28), vorzugsweise gleiche Längsbohrung, aufweisen;
Verwenden mindestens eines der mehreren Zylinderköpfe (24) in einer Flüssigkraftstoff-Brennkraftmaschine, vorzugsweise Diesel-Brennkraftmaschine, wobei der jeweilige Längskanal (28) als Flüssigkraftstoff-Rückflusskanal verwendet wird; und
Verwenden mindestens eines anderen der mehreren Zylinderköpfe (24) in einer Gaskraftstoff-Brennkraftmaschine, vorzugsweise Wasserstoff-Brennkraftmaschine, wobei der jeweilige Längskanal (28) als Gaskraftstoff-Common-Rail verwendet wird, wobei die Gaskraftstoff-Brennkraftmaschine eine Vorrichtung (10) nach einem der Ansprüche 1 bis 12 aufweist.

## Claims

1. A device (10) for supplying gaseous fuel, preferably hydrogen, to a plurality of cylinders of an internal combustion engine, comprising:
a cylinder head (24) comprising a longitudinal channel (28) and a plurality of branch channels (34), the plurality of branch channels (34) being arranged along the longitudinal channel (28) and each extending between the longitudinal channel (28) and an upper side of the cylinder head (24);
a plurality of gaseous fuel injectors (50), preferably gaseous fuel blow-in injectors, the plurality of gaseous fuel injectors (50) being received in the cylinder head (24) and each comprising a gaseous fuel inlet (52) at an end projecting beyond the upper side of the cylinder head (24); and
a plurality of gaseous fuel lines (54) interconnecting the gaseous fuel inlets (52) and the plurality of branch channels (34).

2. The device (10) according to claim 1, wherein:
the plurality of branch channels (34) are each configured as a tap bore, preferably starting from the upper side of the cylinder head (24).

3. The device (10) according to claim 1 or claim 2, wherein:
the longitudinal channel (28) is configured as a longitudinal bore, preferably a longitudinal through bore.

4. The device (10) according to any one of the previous claims, wherein:
an end of the longitudinal channel (28) is closed with a plug (30), preferably a blind rivet plug; and optionally
a further end of the longitudinal channel (28) opposite the end is closed with a further plug (32), preferably a further blind rivet plug.

5. The device (10) according to any one of the previous claims, wherein:
the longitudinal channel (28) is arranged in an upper deck of the cylinder head (24) and/or in an intermediate deck of the cylinder head (24).

6. The device (10) according to any one of the previous claims, further comprising:
a plurality of sealing elements (58), preferably O-rings, wherein the plurality of sealing elements (58) seal between inlet portions (56) of the plurality of gaseous fuel lines (54) and outlet portions (36) of the plurality of branch channels (34).

7. The device (10) according to claim 6, wherein:
the inlet portions (56) are inserted into the outlet portions (36); and/or
the sealing elements (58) are arranged between the inlet portions (56) and the outlet portions (36), preferably held in outer ring grooves of the inlet portions (56).

8. The device (10) according to claim 6 or claim 7, further comprising:
a plurality of fastening plates (60) securing the inlet portions (56) to the upper side of the cylinder head (24), preferably by screwing the plurality of fastening plates (60) to the cylinder head (24).

9. The device (10) according to any one of the previous claims, wherein:
the cylinder head (24) comprises at least one sensor access channel (40, 44) opening into the longitudinal channel (28); and
the device (10) further comprises at least one sensor (42, 46) arranged in the at least one sensor access channel (40, 44).

10. The device (10) according to claim 9, wherein:
the at least one sensor access channel (40, 44) is configured as a tap bore; and/or
the at least one sensor access channel (40, 44) extends from a longitudinal outer side of the cylinder head (24) to the longitudinal channel (28).

11. The device (10) according to claim 9 or claim 10, wherein:
the at least one sensor access channel (40, 44) comprises a pressure sensor access channel (44) and the at least one sensor (42, 46) comprises a pressure sensor (46) arranged in the pressure sensor access channel (44); and/or
the at least one sensor access channel (40, 44) comprises a temperature sensor access channel (40) and the at least one sensor (42, 46) comprises a temperature sensor (42) arranged in the temperature sensor access channel (40).

12. The device (10) according to any one of the previous claims, wherein:
the cylinder head (24) comprises at least one gaseous fuel supply channel (48) opening into the longitudinal channel (28),
wherein preferably:
the at least one gaseous fuel supply channel (48) is configured as a tap bore; and/or
the at least one gaseous fuel supply channel (48) extends from a longitudinal outer side of the cylinder head (24) to the longitudinal channel (28).

13. A motor vehicle, preferably utility vehicle, particularly preferably lorry or bus, comprising:
a gaseous fuel internal combustion engine, preferably hydrogen internal combustion engine, with a device (10) according to any one of the previous claims.

14. A method for using a plurality of cylinder heads (24), comprising:
providing the plurality of cylinder heads (24) comprising a same basic shape and a same longitudinal channel (28), preferably same longitudinal bore;
utilising at least one of the plurality of cylinder heads (24) in a liquid fuel internal combustion engine, preferably a diesel internal combustion engine, wherein the respective longitudinal channel (28) is used as a liquid fuel return channel; and
using at least another one of the plurality of cylinder heads (24) in a gaseous fuel internal combustion engine, preferably hydrogen internal combustion engine, wherein the respective longitudinal channel (28) is used as a gaseous fuel common rail, wherein the gaseous fuel internal combustion engine comprises a device (10) according to any one of claims 1 to 12.

## Revendications

1. Dispositif (10) destiné à amener du carburant gazeux, de préférence de l'hydrogène, vers plusieurs cylindres d'un moteur à combustion, comportant :
une culasse (24), qui comporte un canal longitudinal (28) et plusieurs canaux de dérivation (34), les plusieurs canaux de dérivation (34) étant disposés le long du canal longitudinal (28) et s'étendant respectivement entre le canal longitudinal (28) et une face supérieure de la culasse (24) ;
plusieurs injecteurs de carburant gazeux (50), de préférence des injecteurs par soufflage de carburant gazeux, les plusieurs injecteurs de carburant gazeux (50) étant logés dans la culasse (24) et comportant chacun une entrée de carburant gazeux (52) sur une extrémité dépassant de la face supérieure de la culasse (24) ; et
plusieurs conduites de carburant gazeux (54), qui relient les entrées de carburant gazeux (52) et les plusieurs canaux de dérivation (34).

2. Dispositif (10) selon la revendication 1 :
les plusieurs canaux de dérivation (34) étant chacun réalisés comme un alésage de dérivation, de préférence en partant de la face supérieure de la culasse (24).

3. Dispositif (10) selon la revendication 1 ou la revendication 2 :
le canal longitudinal (28) étant réalisé comme un alésage longitudinal, de préférence un alésage longitudinal de passage.

4. Dispositif (10) selon l'une des revendications précédentes :
une extrémité du canal longitudinal (28) étant fermée avec un bouchon (30), de préférence un bouchon à rivets aveugles ; et en option
une autre extrémité du canal longitudinal (28), qui est opposée à l'extrémité, étant fermée avec un autre bouchon (32), de préférence un autre bouchon à rivets aveugles.

5. Dispositif (10) selon l'une des revendications précédentes :
le canal longitudinal (28) étant disposé dans un pont supérieur de la culasse (24) et/ou dans un pont intermédiaire de la culasse (24).

6. Dispositif (10) selon l'une des revendications précédentes, comportant en outre :
plusieurs éléments d'étanchéité (58), de préférence des joints toriques, les plusieurs éléments d'étanchéité (58) étanchéifiant entre des sections d'admission (56) des plusieurs conduites de carburant gazeux (54) et des sections de sortie (36) des plusieurs canaux de dérivation (34).

7. Dispositif (10) selon la revendication 6 :
les sections d'admission (56) étant enfichées dans les sections de sortie (36) ; et/ou
les éléments d'étanchéité (58) étant disposés entre les sections d'admission (56) et les sections de sortie (36), de préférence maintenus dans ses rainures annulaires extérieures des sections d'admission (56).

8. Dispositif (10) selon la revendication 6 ou la revendication 7, comportant en outre :
plusieurs plaques de fixation (60), qui bloquent les sections d'admission (56) sur la face supérieure de la culasse (24), de préférence en vissant les plusieurs plaques de fixation (60) à la culasse (24).

9. Dispositif (10) selon l'une des revendications précédentes :
la culasse (24) comportant au moins un canal d'accès au capteur (40, 44), qui débouche dans le canal longitudinal (28) ; et
le dispositif (10) comportant en outre au moins un capteur (42, 46), qui est disposé dans l'au moins un canal d'accès au capteur (40, 44).

10. Dispositif (10) selon la revendication 9 :
l'au moins un canal d'accès au capteur (40, 44) étant réalisé comme un alésage de dérivation ; et/ou
l'au moins un canal d'accès au moins un capteur (40, 44) s'étendant en partant d'une face extérieure longitudinale de la culasse (24) vers le canal longitudinal (28).

11. Dispositif (10) selon la revendication 9 ou la revendication 10 :
l'au moins un canal d'accès au capteur (40, 44) comportant un canal d'accès au capteur de pression (44) et l'au moins un capteur (42, 46) comportant un capteur de pression (46), qui est disposé dans le canal d'accès au capteur de pression (44) ; et/ou
l'au moins un canal d'accès au capteur (40, 44) comportant un canal d'accès au capteur de température (40) et l'au moins un capteur (42, 46) comportant un capteur de température (42), qui est disposé dans le canal d'accès au capteur de température (40).

12. Dispositif (10) selon l'une des revendications précédentes :
la culasse (24) comportant au moins un canal d'amenée de carburant gazeux (48), qui débouche dans le canal longitudinal (28) ;
de préférence :
l'au moins un canal d'amenée de carburant gazeux (48) étant formé comme un alésage de dérivation ; et/ou
l'au moins un canal d'amenée de carburant gazeux (48) s'étendant en partant d'une face extérieure longitudinale de la culasse (24) vers le canal longitudinal (28).

13. Véhicule à moteur, de préférence véhicule utilitaire, de manière particulièrement préférée camion ou un autobus, comportant :
un moteur à combustion interne à carburant gazeux, de préférence un moteur à combustion interne à hydrogène, avec un dispositif (10) selon l'une des revendications précédentes.

14. Procédé d'utilisation de plusieurs culasses (24), comportant :
mise à disposition de plusieurs culasses (24), qui comportent une forme de base identique et un canal longitudinal (28) identique, de préférence un alésage longitudinal identique ;
utilisation d'au moins une des plusieurs culasses (24) dans un moteur à combustion interne à carburant liquide, de préférence un moteur à combustion interne au diesel, le canal longitudinal (28) respectif étant utilisé comme canal de retour de carburant liquide ; et
utilisation d'au moins une autre des plusieurs culasses (24) dans un moteur à combustion interne à carburant gazeux, de préférence un moteur à combustion interne à hydrogène, le canal longitudinal (28) respectif étant utilisé comme un système Common Rail à carburant gazeux, le moteur à combustion interne à carburant gazeux comportant un dispositif (10) selon l'une des revendications 1 à 12.
